# EUROPEAN PATENT SPECIFICATION

(11) **EP 1 131 205 B1**
(45) Date of publication and mention of the grant of the patent: **15.12.2004**
(21) Application number: 99952615.5
(22) Date of filing: 19.10.1999
(51) Int. Cl.: B32B 27/08, B65D 65/40

(54) **NEW HIGH RESISTANCE HEAT-SHRINKABLE THERMOPLASTIC FILM**
HITZESCHRUMPFBARE KUNSTSTOFFVERPACKUNGSFOLIE MIT HOHEM WIDERSTAND
NOUVEAU FILM THERMOPLASTIQUE THERMORETRACTABLE A HAUTE RESISTANCE

(30) Priority: 29.10.1998 EP 98120475
(43) Date of publication of application: 12.09.2001
(73) Proprietor: Cryovac, Inc., Duncan, S.C. 29334 (US)
(72) Inventor: PALEARI, Mario, I-20010 Pogliano Milanese (IT); BUZZI, Giampaolo, I-20017 Rho (IT)
(74) Representative: De Carli, Elda
(86) International application number: PCT/EP1999/007941
(87) International publication number: WO 2000/026024

(56) References cited:
- EP-A- 0 107 854
- EP-A- 0 217 252
- EP-A- 0 277 839
- EP-A- 0 447 988
- EP-A- 0 797 918
- WO-A-98/06574
- GB-A- 2 129 370
- US-A- 4 695 491
- US-A- 4 755 402
- DATABASE WPI Section Ch, Week 8503 Derwent Publications Ltd., London, GB; Class A18, AN 85-015754 XP002097034 & JP 59 212260 A (SUMITOMO BAKELITE CO), 1 December 1984 (1984-12-01)
- DATABASE WPI Section Ch, Week 9842 Derwent Publications Ltd., London, GB; Class A17, AN 98-481658 XP002099541 & AU 69862 98 A (GRACE & CO-CONN W R), 30 July 1998 (1998-07-30)

## Description

The present invention refers to a multi-layer, heat-shrinkable, thermoplastic film endowed with a desirable balance of properties, including good shrink properties, good optical properties, very good mechanical properties and a peculiar sealability performance.

The invention also relates to containers, such as tubing, bags and pouches, made with the film.

In general terms, the packaging of food items by means of a heat-shrinkable, gas- barrier, thermoplastic film comprises configuring the heat-shrinkable packaging material, either partially or completely, around a product (e.g. by placing the food item within a bag or pouch fabricated from the film), removing excess air from inside the package (e.g.vacuumizing the bag or pouch), sealing it and thereafter exposing the package to a heat source thereby causing the heat-shrinkable film to shrink and conform with the contours of the packaged food. These films provide to the packaged food an attractive appearance and in the mean time protect the packaged product from the environment and prolong the shelf life of the packaged product.

These films therefore need to have good gas barrier properties and mainly good sealing properties, in order to guarantee that the atmosphere within the package will not be affected by the atmosphere outside the package; they also need to have high mechanical properties to guarantee that the package will survive the handling involved in the product distribution chain; finally they also need to have good optical properties and good shrink properties to provide the end package with the attractive appearance.

Packaging films with an adequate balance of the above properties are known in the literature and spread in the market.

A problem that is however often found with the available films is that in the packaging process it is generally necessary to carefully position the packages to be vacuumized and sealed, one close to the other, in the vacuum chamber, so as to avoid any overlapping of the packages. In fact when overlapped or partially overlapped packages are heat-sealed, either it is not possible to get a seal of sufficient seal strength between the innermost heat-sealing layers of each overlapped package or, if the temperature and pressure of the sealing bars are high enough to guarantee sealing through the overlapped webs, sealing of the overlapped outermost layers may occur, thus leading to a high number of rejects. This also means that in the packaging process the speed of the overall process is limited by the number of packages that, at each sealing cycle, can be positioned, without overlapping, in the vacuum and sealing chamber.

Using bags that can suitably be heat-sealed also when overlapping occurs, without problems of insufficient seal strength and/or sealing or sticking of the outer abuse layers, a higher number of packages could be sealed in each sealing cycle with an increase in productivity. Also, the positioning of the packages in the vacuum and sealing chamber, one along the other with no overlapping, would not be a must thus rendering the presence of an operator dedicated to said positioning, less critical.

While it is easy to list the desired properties, getting a suitable balance thereof by means of a stable and reproducible manufacturing process is not always possible.

### SUMMARY OF THE INVENTION

We have discovered films which can provide for a combination of desirable characteristics: high impact strength, high abuse resistance, high free shrink at 90 °C, high gloss and package presentation, good sealability and seal strength, and stack/overlap sealing capability and can be manufactured via a stable and controlled process.

In a first aspect the present invention is directed to a heat-shrinkable multi-layer film comprising at least
a first outer heat-sealing layer (a) comprising one or more polyolefins;
a second outer abuse layer (b) comprising a polyamide with melting point ≥ 175 °C; and
an intermediate gas barrier layer (c) comprising PVDC,
in the form of a seamless tube with outer heat-sealing layer (a) being the innermost layer of the tube.

In a second aspect the present invention is directed to a container obtained from a heat-shrinkable multi-layer film comprising at least
a first outer heat-sealing layer (a) comprising one or more polyolefins;
a second outer abuse layer (b) comprising a polyamide with melting point ≥ 175 °C; and
an intermediate gas barrier layer (c) comprising PVDC,
by a welding that involves the heat-sealing outer layer (a),
whereby said outer layer (a) is the inside layer of the container and the outer abuse layer (b) is the outside layer of the container.

### DEFINITIONS

In this specification and the accompanying claims:
the term "film" refers to a flat or tubular flexible structure of thermoplastic material having a thickness up to about 150 µm;
the term "heat-shrinkable" refers to a film that shrinks by at least 10 % of its original dimensions, in at least one of the longitudinal and transverse directions, when heated to 90 °C for 4 seconds;
the phrase "longitudinal direction" or " machine direction", herein abbreviated "MD", refers to a direction "along the length" of the film, i.e., in the direction of the film as the film is formed during extrusion and/or coating;
the phrase "transverse direction", herein abbreviated "TD", refers to a direction across the film, perpendicular to the machine direction;
the phrase "outer layer" refers to any film layer having only one of its principal surfaces directly adhered to another layer of the film;
the phrases "sealing-layer", "heat-sealable layer" and "heat sealing layer", refer to the outer film layer involved in the sealing of the film to itself, to another film, and/or to another article which is not a film;
the phrase "abuse layer" and "abuse-resistant layer" refer to the outside layer of the film which is not the sealant layer and which is subject to abuse;
the phrases "inner layer", "intermediate layer", and "internal layer" refer to any film layer having both of its principal surfaces directly adhered to another layer of the film;
the phrase "tie layer" refers to any internal layer having the primary purpose of adhering two layers to one another;
the term "core", and the phrase "core layer" refer to any internal layer which preferably has a function other than serving as a tie or compatibilizer for adhering two layers to one another;
the phrase "directly adhered", as applied to film layers, is defined as adhesion of the subject film layer to the object film layer, without a tie layer, adhesive, or other layer therebetween. In contrast, as used herein, the word "between", as applied to a film layer, expressed as being between two other specific layers, includes both direct adherence of the subject layer to the two other layers it is between, as well as a lack of direct adherence to either or both of the two other layers the subject layer is between, i.e., one or more additional layers can be imposed between the subject layer and one or more of the layers the subject layer is between.

As used herein, the term "homopolymer" is used with reference to a polymer resulting from the polymerization of a single monomer, i.e., a polymer consisting essentially of a single type of repeating unit.

As used herein, the term "copolymer" refers to polymers formed by the polymerization reaction of at least two different monomers.

As used herein, the term "polymer" refers to both homo-polymers and co-polymers as defined above.

As used herein the term "polyolefin" is used with reference to any thermoplastic polymer of simple olefins such as ethylene, propylene, and butene, and co-polymer comprising a major proportion of a simple olefin and a minor proportion of one or more comonomers copolymerisable therewith such as typically another olefin, vinyl acetate, alkyl (meth)acrylate, (meth)acrylic acid, maleic anhydride, and the like, as well as modifications thereof. The term "polyolefin" specifically includes polyethylene, ethylene co-and ter-polymers, polybutene, propylene-butene co- polymer, and the like.

As used herein the terms "polyethylene" and "ethylene homopolymer" identify polymers consisting essentially of an ethylene repeating unit. Depending on the polymerization process employed, polymers with a different degree of branching and a different density can be obtained. Those characterized by a low degree of branching and showing a density higher than 0.940 g/cm³ are called HDPE while those with a higher level of branching and a density up to 0.940 g/cm³ are called LDPE.

As used herein the term "ethylene copolymer" refers to the copolymers of ethylene with one or more other olefins and/or with a non-olefinic comonomer copolymerizable with ethylene, such as vinyl monomers, modified polymers thereof, and the like. Specific examples include ethylene/α-olefin copolymers, ethylene/vinyl acetate copolymers, ethylene/ethyl acrylate copolymers, ethylene/butyl acrylate copolymers, ethylene/methyl acrylate copolymers, ethylene/acrylic acid copolymers, ethylene/methacrylic acid copolymers, ionomer resins, ethylene/alkyl acrylate/maleic anhydride ter-polymers, etc..

As used herein, the phrase "heterogeneous polymer" refers to polymerization reaction products of relatively wide variation in molecular weight and relatively wide variation in composition distribution, i.e., polymers made, for example, using conventional Ziegler-Natta catalysts. Such polymers typically contain a relatively wide variety of chain lengths and comonomer percentages.

As used herein, the phrase "homogeneous polymer" refers to polymerization reaction products of relatively narrow molecular weight distribution and relatively narrow composition distribution. Homogeneous polymers exhibit a relatively even sequencing of comonomers within a chain, the mirroring of sequence distribution in all chains, and the similarity of length of all chains, and are typically prepared using metallocene, or other single-site type catalysis.

More particularly, homogeneous ethylene/α-olefin copolymers may be characterized by one or more methods known to those of skill in the art, such as molecular weight distribution (Mw/Mn), composition distribution breadth index (CDBI), and narrow melting point range and single melt point behavior.

A homogeneous ethylene/α-olefin copolymer can, in general, be prepared by the copolymerization of ethylene and any one or more α-olefin. Preferably, the α-olefin is a C₃-C₂₀ α-mono-olefin, more preferably, a C₄-C₁₂ α-mono-olefin, still more preferably, a C₄-C₈ α-mono-olefin. Still more preferably, the α-olefin comprises at least one member selected from the group consisting of butene-1, hexene-1, and octene-1. Most preferably, the α-olefin comprises octene-1, and/or a blend of hexene-1 and butene-1.

Processes for preparing homogeneous polymers are disclosed in US Patent No. 5,206,075, US Patent No. 5,241,031, and PCT International Application WO 93/03093. Further details regarding the production and use of one genus of homogeneous ethylene/α-olefin copolymers are disclosed in US Patent No. 5,206,075, to Hodgson, Jr.; US Patent No. 5,241,031, to Mehta; PCT International Publication Number WO 93/03093, in the name of Exxon Chemical Company; and PCT International Publication Number WO 90/03414, in the name of Exxon Chemical Patents, Inc.. Still another genus of homogeneous ethylene/α-olefin copolymers is disclosed in US Patent No. 5,272,236, to Lai, et.al., and US Patent No. 5,278,272, to Lai, et.al..

As used herein, the phrase "ethylene/α-olefin copolymers", "ethylene/α-olefin copolymers", refer to such heterogeneous materials as linear low density polyethylene (LLDPE), linear medium density polyethylene (LMDPE) and very low and ultra low density polyethylene (VLDPE and ULDPE); and homogeneous polymers such as metallocene catalyzed polymers such as EXACT™ materials supplied by Exxon, AFFINITY™ and ENGAGE™ materials supplied by Dow, LUFLEXEN™ materials supplied by BASF and TAFMER™ materials supplied by Mitsui Petrochemical Corporation. These materials generally include copolymers of ethylene with one or more comonomers selected from C4 to C 10 α-olefins such as butene-1, hexene-1, octene-1, etc..

As used herein the term "modified polyolefin" is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like; as well as of modified polymer obtained by incorporating, into the olefin homopolymer or copolymer, an unsaturated carboxylic acid, e.g. maleic acid, fumaric acid, or the like, or a derivative thereof such as the anhydride, ester or metal salt or the like. Examples of said modified polyolefins are graft copolymers of maleic acid or anhydride onto ethylene/α-olefin copolymers, graft copolymers of fused ring carboxylic anhydrides onto polyethylene, resin mixtures of these and mixtures with polyethylene or ethylene/α-olefin copolymers.

As used herein the term "ethylene-acrylic acid and ethylene-methacryilic acid copolymers" refers to copolymers of ethylene with a copolymerisable ethylenically unsaturated carboxylic acidic monomer selected from acrylic acid and methacrylic acid. The copolymer typically contains from about 4 to about 18% by weight of acrylic or methacrylic acid units. Said copolymer can also contain, copolymerised therein an alkyl (meth)acrylate, such as n-butyl acrylate or methacrylate or isobutyl acrylate or methacrylate. Said copolymer can be in the free acid form as well as in the ionized or partially ionized form wherein the neutralizing cation can be any suitable metal ion, e.g. an alkali metal ion, a zinc ion or other multivalent metal ions; in this latter case the copolymer is also termed "ionomer".

As used herein the term "ethylene-vinyl acetate copolymer" or "EVA" is intended to refer to a copolymer formed from ethylene and vinyl acetate monomers wherein the ethylene derived units in the copolymer are present in major amounts; preferably between about 60 % and 98 % by weight and the vinyl acetate derived units in the copolymer are present in minor amounts, preferably between about 2 % and about 40 % by weight.

As used herein the term "ethylene-alkyl (meth)acrylate copolymers" refers to copolymers of ethylene with alkyl (meth)acrylates, e.g. methyl (meth)acrylate, butyl (meth)acrylate, and iso-butyl (meth)acrylate wherein the ethylene derived units in the copolymer are present in major amounts and the alkyl (meth)acrylate derived units in the copolymer are present in minor amounts, preferably between about 2 % and about 28 % by weight.

As used herein the term EVOH refers to saponified products of ethylene-vinyl ester copolymers, generally of ethylene-vinyl acetate copolymers, wherein the ethylene content is typically comprised between 20 and 60 % by mole and the degree of saponification is generally higher than 85 % preferably higher than 95 %.

As used herein the term PVDC refers to a vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) or to a blend thereof in different proportions. Generally said PVDC contains plasticisers and/or stabilizers as known in the art.

As used herein, the term polyamide is intended to refer to both polyamides and copolyamides. This term specifically includes those aliphatic polyamides or copolyamides commonly referred to as e.g. polyamide 6 (homopolymer based on ε- caprolactam), polyamide 69 (homopolycondensate based on hexamethylene diamine and azelaic acid), polyamide 610 (homopolycondensate based on hexamethylene diamine and sebacic acid), polyamide 612 (homopolycondensate based on hexamethylene diamine and dodecandioic acid), polyamide 11 (homopolymer based on 11-aminoundecanoic acid), polyamide 12 (homopolymer based on ω-aminododecanoic acid or on laurolactam), polyamide 6/12 (polyamide copolymer based on ε-caprolactam and laurolactam), polyamide 6/66 (polyamide copolymer based on ε-caprolactam and hexamethylenediamine and adipic acid), polyamide 66/610 (polyamide copolymers based on hexamethylenediamine, adipic acid and sebacic acid), modifications thereof and blends thereof. Said term also includes crystalline or partially crystalline, aromatic or partially aromatic, polyamides.

Melting information by DSC are reported as second heating data, i.e., the sample is heated at a programmed rate of 10 °C/min to a temperature below its critical range, cooled down and then reheated (2^{nd} heating) still at a programmed rate of 10°C/min.

### DETAILED DESCRIPTION OF THE INVENTION

In the film according to the present invention the heat-sealing layer (a) may comprise a single polymer or a blend of two or more polymers as known in the art. Preferably the melting point of the polyolefin resin(s) of the heat-sealing layer (a) will be < 140 °C, and preferably < 130°C. In a more preferred embodiment it will be comprised between about 80°C and about 128 °C.

Such a layer may for example comprise heterogeneous or homogeneous ethylene- (C₄-C₈)-α-olefin copolymers having a density ≤ 0.915 g/cm³; blends thereof with minor amount of polyethylene homopolymers; ethylene-vinyl acetate copolymers; ethylene-acrylic or methacrylic acid copolymers including ionomers; blends of heterogeneous or homogeneous Pthylene-(C₄-C₈)-α-olefin copolymers having a density from about 0.915 g/cm³ to about 0.930 g/cm³ with ethylene-vinyl acetate copolymers or ethylene-alkyl (meth)acrylate copolymers; ethylene-propylene-butene ter-polymers; ethylene-alkyl acrylate-maleic anhydride ter-polymers; and the like polymers.

In a preferred embodiment of the present invention the heat-sealing layer (a) will comprise a heterogeneous or homogeneous ethylene-(C₄-C₈)-α-olefin copolymer having a density ≤ 0.915 g/cm³, and even more preferably a heterogeneous or homogeneous ethylene-(C₄-C₈)-α-olefin copolymer having a density comprised between about 0.895 g/cm³ and about 0.912 g/cm³. The Melt Index of said heterogeneous or homogeneous ethylene-(C₄-C₈)-α-olefin copolymer may range from about 0.1 to about 15 g/10' (measured by ASTM D-1238, Condition E). However, preferred values are in the range 0.5-10 g/10' and still more preferred values are in the range 1.0-7.0 g/10'.

The resins used in the manufacture of the films according to the present invention, not only in the heat-sealing (a) but also in the outer abuse layer (b) or in any of the intermediate layers, can be suitably additivated as known in the art in order to improve the properties of the film or the manufacturing process thereof.

As an example the resins may contain stabilizers, anti oxidants, pigments, UV absorbers, cross-linking enhancers or cross-linking inhibitors, anti-fog agents, slip and anti-blocking agents, etc., as conventionally used in this field.

The polyamide of the outer layer (b) will have a melting point ≥ 175 °C, typically of from about 175 °C to about 250°C; preferably of from about 180 °C to about 240 °C; more preferably of from about 185 °C to about 230 °C; and still more preferably of from about 188 °C to about 225 °C.

A most preferred group of polyamides, with a melting temperature of from about 188 °C to about 225 °C, suitable for use in the outer abuse layer (b), includes certain copolyamides 6/12, such as PA6/12 CR-8 and CR-9 marketed by EMS, polyamide 66, copolyamides 6/66 such as CA95WP marketed by Allied Signal, certain polyamide 6 copolymers (modified polyamide 6) comprising less than 5 %, preferably less than 4 %, and even more preferably less than 3 % by weight of an aromatic co-monomer such as terephthalic acid, such as Sniamid™ F36T/S marketed by Caffaro, certain copolyamides of polyamide 6 and a partially aromatic polyamide, such as Durethan™ CI31F and CI31FKS marketed by Bayer, and certain terpolyamides such as those based on polyamide 6, polyamide 11, and polyamide 66, sold by Bayer under the trade name Durethan™ VP KU 2-2153 or KU 2-2153F.

Preferably the outer abuse layer (b) will comprise polyamide 6, a modified polyamide 6, a co-polyamide of polyamide 6 and a partially aromatic polyamide, or a ter-polyamide based on polyamide 6, polyamide 11, and polyamide 66.

The outer abuse layer (b) will contain at least 50 % by weight and preferably at least 60 % by weight of one or more polyamides with a m.p. ≥ 175 °C.

In a preferred embodiment of the present invention the outer abuse layer (b) will comprise a blend comprising a polyamide having a m.p. ≥ 175 °C and an ethylene-vinyl alcohol copolymer. Preferred EVOH copolymers for use in such a blend will contain between about 30 and about 50 % by mole of ethylene.

When a blend with EVOH is employed for the outer abuse layer (b), the amount by weight of EVOH in said outer layer will be up to about 40 % with respect to the overall weight of the layer. Typically the amount of EVOH will be comprised between about 3 and about 40 % by weight, preferably between about 5 and about 35 % by weight, and even more preferably between about 10 and about 30 % by weight.

It has been found in fact that the presence of an amount of at least about 3 % by weight of EVOH in said outer abuse layer (b) improves stretchability of the tape, thus facilitating the orientation step and increasing the free shrink of the end structure, while it has also been found that the good mechanical properties and the stack/overlap sealing capability of the end film are maintained even when amounts as high as about 40 % by weight of EVOH are employed in said outer abuse layer (b).

The film according to the present invention requires the presence of an intermediate gas barrier layer (c) wherein said gas (e.g. oxygen, nitrogen, carbon dioxide, etc.) barrier layer comprises PVDC.

In an even more preferred embodiment the PVDC comprises vinylidene chloride-methyl acrylate copolymer, or vinylidene chloride-methyl methacrylate copolymer, or a blend of vinylidene chloride-vinyl chloride copolymer and a minor proportion of vinylidene chloride-methyl acrylate copolymer.

The thickness of the intermediate gas barrier layer (c) will generally be comprised between about 2 and about 15 µm, as thicker gas barrier layers will not bring about any appreciable increase in barrier properties worth the additional costs involved, while thinner gas barrier layers cannot guarantee the desired low level of gas permeability. Preferably the thickness of the intermediate gas barrier layer (c) will be comprised between about 3 and about 12 µm, and even more preferably between about 4 and about 10 µm.

The thickness of the outer abuse layer (b) will be typically comprised between about 2 and about 15 µm, whereas a preferred thickness will be comprised between about 3 and about 10 µm, and an even more preferred thickness will be comprised between about 4 and about 8 µm. The outer abuse layer (b) needs in fact to be thick enough to provide for the desired good mechanical properties and the stack/overlap sealability, while it should not be too thick as otherwise stretchability of the tape and, as a consequence thereof, free shrink of the end structure, will be negatively affected.

The thickness of the outer heat-sealing layer (a) typically depends on the overall thickness of the film and on the number of layers present in the end structure. In case of thin films it generally ranges from about 2 µm to e.g. about 6, or 8, or 10 µm. In case of thicker films, such as those used for the manufacture of bags or pouches, it is typically greater than 4 µm, preferably greater than 5 µm, and even more preferably greater than 6 µm, and up to about 20, 30, 40 µm or even more.

Generally, the film has a total thickness of from about 12 to about 150 µm; preferably, from about 15 to about 130 µm; more preferably, from about 20 to about 120 µm; still more preferably, from about 30 to about 100 µm; yet still more preferably, from about 35 to about 90 µm.

Additional inner layers can be added e.g. to increase the bulk of the overall structure and/or further improve the shrink and/or the mechanical properties of the film, etc. as known in the art.

Suitable resins for said additional intermediate layers include for instance ethylene copolymers, particularly ethylene-vinyl acetate copolymers, ethylene-alkyl acrylate or ethylene-alkyl methacrylate copolymers, ionomers, ethylene-α-olefin copolymers with a low density or very low density, and the like resins.

To improve the adhesion between the gas barrier layer (c) and the outer layers (a) and (b), or between the different layers, in case additional inner layers are present, tie layers can be employed. Tie layers typically comprise a modified polyolefin or preferably a blend of a modified polyolefin with a polyolefin, such as for instance a blend of an acid or anhydride modified EVA with EVA or LLDPE. Their thickness is typically of few µm as their aim is just to increase the bond between the different layers.

In one embodiment of the present invention the film has at least four layers wherein a tie layer (d) is adhered to one of the surfaces of the gas barrier intermediate layer (c), and to either one of the outer abuse layer (c) and the outer heat-sealing layer (a). In particular, in the case of a four layer film, a tie layer (d) is generally required for bonding layer (c) to the outer abuse layer (b), while a direct adhesion between said PVDC comprising gas barrier layer (c) and the heat-sealing layer (a) may be achieved by suitably selecting the resin or the resin blend of the heat-sealing layer (a). As an example, direct adhesion between the PVDC comprising gas barrier layer (c) and the heat-sealing layer (a) can be obtained using, for the heat-sealing layer (a), ethylene-vinyl acetate copolymers, ethylene-alkyl acrylate copolymers, ethylene-alkyl methacrylate copolymers, ethylene-α-olefin copolymers, and the like polymers and blends thereof.

In another embodiment the film has at least five layers wherein a tie layer (d) is between the sealing layer (a) and one of the surfaces of the intermediate gas barrier layer (c), and another tie layer (d'), that may be equal to or different from (d) is between the other surface of the intermediate gas-barrier layer (c) and the outer abuse layer (b).

The films according to the present invention can be manufactured by the so-called trapped-bubble process, which is a widely known process typically used for the manufacture of the heat-shrinkable films for food contact packaging.

According to said process, the multi-layer film is co-extruded through a round die to obtain a tube of molten polymer which is quenched immediately after extrusion without being expanded, then heated to a temperature which is above the T_{g} of all the resins employed and below the melting temperature of at least one of said resins, typically by passing it through a hot water bath, but alternatively using a hot air tunnel or an I.R. oven, and expanded, still at this temperature by internal air pressure to get the transversal orientation and by a differential speed of the pinch rolls which hold the thus obtained "trapped bubble" to provide the longitudinal orientation. The film is then rapidly cooled to somehow freeze the molecules of the film in their oriented state and wound.

While in a preferred embodiment of the present invention the film is biaxially oriented and will therefore be heat-shrinkable in both directions, mono-oriented films or preferentially oriented films can be obtained by avoiding or controlling transversal or longitudinal orientation. Suitable orientation ratios are typically comprised between 2 : 1 and 5 : 1, and are preferably comprised between 2.5 : 1 and 4 : 1. Higher orientation ratios can be applied when different technologies (e.g. tenter frame) are employed for the orientation or in case of monoaxially oriented films.

As used herein, the phrase "free shrink" refers to the percent dimensional change in a 10 cm x 10 cm specimen of film, when subjected to selected heat (i.e., at a certain temperature), with the quantitative determination being carried out according to ASTM D 2732, as set forth in the 1990 Annual Book of ASTM Standards, Vol. 08.02, pp.368-371, which is hereby incorporated, in its entirety, by reference thereto.

The multi-layer film according to the present invention typically has a total free shrink of at least 20 % at 90 °C, preferably of at least 30 % at 90 °C, more preferably of at least 40 % at 90 °C and even more preferably of at least 50 % at 90 °C. "Total free shrink" is determined by summing the percent free shrink in the machine direction with the percentage of free shrink in the transverse direction. For example, a film that exhibits, at 90 °C, 20 % free shrink in the transverse direction and 20 % free shrink in the machine direction, has a "total free shrink" at 90 °C of 40 %. Unless specified otherwise, the phrase "free shrink", as used herein, refers to total free shrink.

Depending on the number of layers in the structure it may be advisable or necessary to split the co-extrusion step : in such a case a tube is first formed of a limited number of layers, with the heat-sealing layer (a) on the inside of the tube; this tube is quenched quickly and, before submitting it to the orientation step, it is extrusion-coated with the remaining layers, again quenched quickly and then passed to the orientation. During the extrusion-coating step the tube is slightly inflated just to keep it in the form of a tube and avoid that it collapses.

The coating step can be simultaneous, by coextruding all the remaining layers altogether, so as to simultaneously adhere all of them, one over the other, to the quenched tube obtained in the first extrusion step, or this coating step can be repeated as many times as the layers which are to be added.

According to a preferred embodiment of the present invention the film is partially or wholly cross-linked. Cross-linking may be achieved either by irradiation or chemically. Preferably cross-linking is achieved by irradiation that involves submitting the film to a suitable radiation dosage of high-energy electrons, preferably using an electron accelerator, with the dosage level being determined by standard dosimetry methods. A suitable radiation dosage of high-energy electrons is in the range of up to about 120 kGy, more preferably from about 16 to about 100 kGy, and still more preferably from about 20 to about 90 kGy.

The radiation is not limited to electrons from an accelerator since any ionizing radiation may be used.

Irradiation is most preferably performed prior to orientation, on the extruded primary tape, but it could also be performed after orientation on the end film or during orientation.

If only some of the layers of the film need to be irradiated, the extrusion coating technique is used and the irradiation step is carried out on the primary tube or sheet, before extrusion coating and orientation.

In a preferred embodiment of the invention, the film is obtained by extrusion coating and only the primary tape, that will not comprise the PVDC layer, is irradiatively cross-linked.

Particularly when the whole film is cross-linked by irradiation, it may be advantageous to make use of cross-linking controlling agents which can be added to the different layers in different amounts to control the degree of cross-linking in each layer. Suitable cross-linking controlling agents are for instance those described in EP-A-333,294.

Alternatively, chemical cross-linking of the resins can be achieved by the addition of suitable cross-linking agents, e.g. peroxides, to the resins to be cross-linked.

It is also possible to combine chemical cross-linking and irradiation, as an example when the cross-linking agents added to the resins need some irradiation to trigger the cross-linking reaction.

The films according to the present invention may optionally be subjected to other types of energetic radiation treatments that may have different aims. As an example the outer abuse layer (b) of the film may be subjected to a corona discharge treatment to improve the print receptivity characteristics of the film surface or the outer heat-sealant layer (a) may be subjected to a corona discharge treatment to improve the heat-sealability and/or the meat adhesion properties thereof.

In some instances it may be desirable to submit the oriented structure to an annealing step; this typically consists in a controlled heating-cooling treatment that is carried out on the oriented film in order to have better control on low temperature dimensional stability of the heat-shrinkable film while maintaining the shrink properties at higher temperatures.

The film of the present invention may be used either as a film, or as a bag or pouch, or as a tubing to form a package in a conventional manner.

In a preferred embodiment the heat-shrinkable film of the present invention is obtained as a seamless tubular film wherein the heat-sealing layer (a) is the innermost layer of the tube and the outer abuse layer (b) is the outermost layer of the tube and, if desired, individual bags are formed by transverse sealing and cutting across the flattened tubular film.

In a first aspect, therefore, the present invention is directed to a heat-shrinkable multi-layer film comprising at least
a first outer heat-sealing layer (a) comprising one or more polyolefins;
a second outer abuse layer (b) comprising a polyamide with melting point ≥ 175 °C; and
an intermediate gas barrier layer (c) comprising PVDC,
in the form of a seamless tube with outer heat-sealing layer (a) being the innermost layer of the tube.

Alternatively the film may also be prepared by flat extrusion (co-extrusion or extrusion coating) followed by orientation in one or both directions via tenter frame. Orientation may be carried out in such a case either sequentially or simultaneously. The flat film can then be converted to transverse sealed (TS) bags or pouches, by center-folding the film and then transversely sealing and severing it. Other methods of making bags and packages are known and may be readily adapted to use with the multi-layer films of the invention. Preferably, the bag is produced by sealing the outer heat-sealing layer (a) to itself, whereby said outer layer is an inside bag layer and the outer abuse layer (b) is an outside bag layer.

In a second aspect, therefore the present invention is directed to a container, preferably a bag, obtained from a heat-shrinkable multi-layer film comprising at least a first outer heat-sealing layer (a) comprising one or more polyolefins;
a second outer abuse layer (b) comprising a polyamide with melting point ≥ 175 °C; and
an intermediate gas barrier layer (c) comprising PVDC,
by a welding involving the outer heat-sealing layer (a), whereby said outer layer (a) is the inside container layer and the outer abuse layer (b) is the outside container layer.

The present invention will now be described in more detail with particular reference to the following Examples:

### Example 1

A seven-layer film has been prepared by extrusion coating through a round die.

A substrate formed of the following layers (a)/(e)/(f)/(g), wherein the heat-sealing layer (a) is the innermost layer of the tube, has been co-extruded, quickly quenched with a water cascade, irradiated at a dosage level of 64 kGy and coated with the sequence of three layers, (c)/(d)/(b), wherein the outer abuse layer (b) is the outermost layer of the overall tube. The extrusion coated tape has then been quenched, re-heated by passing it through a water bath at about 95 °C-98 °C, and oriented at this temperature (with orientation ratios of about 3.6 : 1 in the longitudinal direction and about 3.2 : 1 in the transverse direction) by the trapped-bubble process.

The sequence of layers (from the innermost heat-sealing layer (a) to the outermost abuse layer (b)) in the overall structure is as follows:
(a)/(e)/(f)/(g)//(c)/(d)/(b)
wherein the resins used for the different layers and, between parentheses, the thickness of each layer are reported below:
(a) homogeneous ethylene-octene-1 copolymer - d = 0.905 g/cm³ - m.p. = 99°C (DSC - 2^{nd} heating) - MI = 6 g/10' (measured by ASTM D1238 - Condition E (190 °C, 2.16 kg)) - Affinity PL 1280 by Dow (9 µm)
(e) a blend of 70 % by weight of ethylene-vinyl acetate copolymer [14 % VA, MI = 0.25 g/10' (measured by ASTM D1238 - Condition E (190 °C, 2.16 kg)) - Escorene Ultra F100014 by Exxon] and 30 % by weight of heterogeneous ethylene-octene-1 copolymer [d = 0.920 g/cm³ - m.p. = 124 °C (DSC - 2^{nd} heating) - MI = 1 g/10' (measured by ASTM D1238 - Condition E (190 °C, 2.16 kg)) - Dowlex 2045 E by Dow] (6 µm)
(f) a blend of 20 % by weight of ethylene-vinyl acetate copolymer [14 % VA, MI = 0.25 g/10' (measured by ASTM D1238 - Condition E (190 °C, 2.16 kg)) - Escorene Ultra F100014 by Exxon] and 80 % by weight of heterogeneous ethylene-octene-1 copolymer [d = 0.920 g/cm³ - m.p. = 124 °C (DSC - 2^{nd} heating) - MI = 1 g/10' (measured by ASTM D1238 - Condition E (190 °C, 2.16 kg)) - Dowlex 2045 E by Dow] (7 µm)
(g) a blend of 70 % by weight of ethylene-vinyl acetate copolymer [14 % VA, MI = 0.25 g/10' (measured by ASTM D1238 - Condition E (190 °C, 2.16 kg)) - Escorene Ultra F100014 by Exxon] and 30 % by weight of heterogeneous ethylene-octene-1 copolymer [d = 0.920 g/cm³ - m.p. = 124 °C (DSC - 2^{nd} heating) - MI = 1 g/10' (measured by ASTM D1238 - Condition E (190 °C, 2.16 kg)) - Dowlex 2045 E by Dow] (8 µm)
(c) a blend of 30 % by weight of vinylidene chloride-methyl acrylate copolymer, 68 % by weight of vinylidene chloride-vinyl chloride and 2 % by weight of epoxidised soybean oil (6 µm)
(d) anhydride grafted and rubber modified LLDPE - Tymor 1203 by Morton (4 µm)
(b) a blend of 30 % by weight of EVOH [(44 mole % ethylene) - EVAL EP-105A by Marubeni] and 70 % by weight of a terpolyamide based on polyamide 6, polyamide 11, and polyamide 66 [sold by Bayer under the trade name Durethan® VP KU 2-2153 (m.p. 191 °C)] (6 µm).

### Example 2

A seven layer film has been obtained by following substantially the same procedure described in the foregoing example but replacing the resins used for layers (e), (f), and (g), with the following ones :
(e') ethylene-vinyl acetate copolymer [14 % VA, MI = 0.25 g/10' (measured by ASTM D1238 - Condition E (190 °C, 2.16 kg)) - Escorene Ultra F100014 by Exxon]
(f) ethylene-methacrylic acid copolymer [12 % MA, MI = 1.6 g/10' (measured by ASTM D1238 - Condition E (190 °C, 2.16 kg)) - Nucrel 1202 by DuPont]
(g') ethylene-vinyl acetate copolymer [14 % VA, MI = 0.25 g/10' (measured by ASTM D1238 - Condition E (190 °C, 2.16 kg)) - Escorene Ultra F100014 by Exxon]

### Example 3

A seven-layer film has been obtained by following substantially the same procedure described in Example 1 but replacing the blend used in layer (b) with the following one :
(b') blend of 15 % by weight of EVOH [(44 mole % ethylene) - EVAL EP-105A by Marubeni] and 85 % by weight of a polyamide 6/66 with m.p. 196 °C [marketed by Allied Signal as CA95WP].

### Example 4

A five-layer film has been prepared by extrusion coating through a round die.

A substrate formed of the following two layers (a')/(e"), wherein the heat-sealing layer (a) is the innermost layer of the tube, has been co-extruded, quickly quenched with a water cascade, irradiated at a dosage level of 64 kGy and coated with the sequence of three layers, (c)/(d)/(b), wherein the outer abuse layer (b) is the outermost layer of the overall tube. The extrusion-coated tape has then been quenched, re-heated by passing it through a water bath at about 95 °C-98 °C, and oriented at this temperature by the trapped-bubble process.

The sequence of layers (from the innermost heat-sealing layer (a) to the outermost abuse layer (b)) in the overall structure is as follows:
(a')/(e")//(c)/(d)/(b)
wherein the resins used for the layers and, between parentheses, the thickness of each layer are reported below:
(a') heterogeneous ethylene-octene-1 copolymer [d = 0.911 g/cm³ - MI = 7 g/10' (measured by ASTM D1238 - Condition E (190 °C, 2.16 kg)) - Stamylex 08-076 by DSM] (14 µm)
(e") ethylene-vinyl acetate copolymer [9 % VA, MI = 3.0 g/10' (measured by ASTM D1238 - Condition E (190 °C, 2.16 kg)) - Evatane 1020 VN 3 by Elf Atochem] (20 µm)
(c), (d), and (b) have the same composition as in Example 1 and a thickness of about 5 µm each.

### Example 5

A five layer film has been prepared by following essentially the same procedure as in the foregoing Example 4 but replacing in the outermost layer the blend (b) with the blend (b') described in Example 3.

### Example 6

A seven layer film has been obtained by following substantially the same procedure as in Example 2 but replacing in the outermost layer the blend (b) with the blend (b') described in Example 3 and modifying the thickness of the layers.
In the overall structure (a)/(e')/(f')/(g')//(c)/(d)/(b') the thickness of each layer is, expressed in µm, 13/6/6/7//5/9/3.

### Example 7

A five-layer film has been prepared by following substantially the same procedure described in Example 4 but replacing the blend used in the outermost layer with the following one :
(b") blend of 25 % by weight of EVOH [(44 mole % ethylene) - EVAL EP-105A by Marubeni] and 75 % by weight of polyamide 6 copolymer (polycaprolactam containing about 1 % terephthalic acid comonomer) with m.p. = 213°C (DSC - 2^{nd} heating) - [Sniamid F36T/S by Caffaro].

### Example 8

A five-layer film has been prepared essentially as described in Example 4 but replacing the blend used for the outer abuse layer (b) with
(b''') blend of 10 % by weight of EVOH [(44 mole % ethylene) - EVAL EP-105A by Marubeni] and 90 % by weight of co-polyamide 6/6I with m.p. = 188-190 °C (DSC - 2^{nd} heating) [Durethan™ CI31F by Bayer].

### Examples 9 and 10

Two seven layer films have been prepared essentially as described in Example 1 but adding to the blend used for the outer abuse layer (b), 4 wt. % of a masterbatch of slip and antiblocking agents in a polyamide 6/12 copolymer with m.p. ≈ 190 °C (Grilon 3476FS by ESM - Example 9) or in a polyamide 6/12 copolymer with m.p. ≈ 135 °C (Grilon 7361FS by EMS - Example 10).

### Example 11

A seven-layer film is prepared essentially as described in Example 1 but replacing the blend used for the outer abuse layer (b) with
(b^{iv}) a ternary copolyamide based on polyamide 6, polyamide 11, and polyamide 66 with m.p. = 191 °C (DSC- 2^{nd} heating) - [Durethan™ VP KU 2-2153 by Bayer].

### Example 12

A seven-layer film is prepared essentially as described in Example 1 but replacing the blend used for the outer abuse layer (b) with
(b^{v}) a co-polyamide 6/12 with m.p. = 190 °C ((DSC- 2^{nd} heating) [CR-8 by EMS].

### Example 13

A seven-layer film is prepared essentially as described in Example 1 but replacing the blend used for the outer abuse layer (b) with
(b^{vi}) a blend of 30 % by weight of EVOH [(44 mole % ethylene) - EVAL EP-105A by Marubeni] and 70 % by weight of a co-polyamide 6/12 with m.p. = 190 °C ((DSC- 2^{nd} heating) [CR-8 by EMS].

### Example 14

A seven-layer film is prepared essentially as described in Example 1 but replacing the resin used for layer (d) with
(d') a modified VLDPE resin sold by Mitsui as Admer AT 1094E.

### Example 15

A seven-layer film is prepared essentially as described in Example 1 but replacing the blend used for the outer abuse layer (b) with
(b^{vii}) a blend of 30 % by weight of EVOH [(44 mole % ethylene) - EVAL EP-105A by Marubeni] and 70 % by weight of co-polyamide 6/6I with m.p. = 188-190 °C (DSC - 2^{nd} heating) [Durethan™ CI31F by Bayer].

### Example 16

A seven-layer film is prepared by following essentially the same procedure of Example 1.

A substrate formed of the following layers (a')/(e')/(f')/(g'), wherein the heat-sealing layer (a') is the innermost layer of the tube, has been co-extruded, quickly quenched with a water cascade, irradiated at a dosage level of 64 kGy and coated with the sequence of three layers, (c)/(d')/(b^{iv}), wherein the outer abuse layer (b^{iv}) is the outermost layer of the overall tube. The extrusion coated tape has then been quenched, re-heated by passing it through a water bath at about 95 °C-98 °C, and oriented at this temperature (with orientation ratios of about 3.6 : 1 in the longitudinal direction and about 3.2 : 1 in the transverse direction) by the trapped-bubble process.

The sequence of layers (from the innermost heat-sealing layer (a') to the outermost abuse layer (b^{iv}) in the overall structure is as follows:
(a')/(e')/(f')/(g')//(c)/(d')/((b^{iv})
wherein the resins used for the different layers and, between parentheses, the thickness of each layer are reported below:
(a') heterogeneous ethylene-octene-1 copolymer [d = 0.911 g/cm³ - MI = 7 g/10' (measured by ASTM D1238 - Condition E (190 °C, 2.16 kg)) - Stamylex 08-076 by DSM] (11 µm)
(e') ethylene-vinyl acetate copolymer [14 % VA, MI = 0.25 g/10' (measured by ASTM D1238 - Condition E(190 °C, 2.16 kg)) - Escorene Ultra F100014 by Exxon] (6 µm)
(f') ethylene-methacrylic acid copolymer [12 % MA, MI = 1.6 g/10' (measured by ASTM D1238 - Condition E (190 °C, 2.16 kg)) - Nucrel 1202 by DuPont] (6 µm)
(g') ethylene-vinyl acetate copolymer [14 % VA, MI = 0.25 g/10' (measured by ASTM D1238 - Condition E (190 °C, 2.16 kg)) - Escorene Ultra F100014 by Exxon] (6 µm)
(c) a blend of 30 % by weight of vinylidene chloride-methyl acrylate copolymer, 68 % by weight of vinylidene chloride-vinyl chloride and 2 % by weight of epoxidised soybean oil (6 µm)
(d') modified VLDPE - Admer AT 1094 E by Mitsui (4 µm)
(b^{iv}) a terpolyamide based on polyamide 6, polyamide 11, and polyamide 66 [sold by Bayer under the trade name Durethan® VP KU 2-2153 (m.p. 191 °C)] (6 µm).

### Example 17

A seven layer film is prepared essentially as described in Example 16 but replacing the resin used for layer (d') with
(d) anhydride grafted and rubber modified LLDPE - Tymor 1203 by Morton.

### Example 18

A seven-layer film is prepared essentially as described in Example 11 but replacing the resin used for the heat-sealing layer (a) with the following resin
(a') heterogeneous ethylene-octene-1 copolymer [d = 0.911 g/cm³ - MI = 7 g/10' (measured by ASTM D1238 - Condition E (190 °C, 2.16 kg)) - Stamylex 08-076 by DSM] and the resin (f) with the following one
(f')) ethylene-methacrylic acid copolymer [12 % MA, MI = 1.6 g/10' (measured by ASTM D1238 - Condition E (190 °C, 2.16 kg)) -Nucrel 1202 by DuPont].

### Example 19

A seven layer film is prepared essentially as described in Example 11 but replacing the resin used for layer (d) with
(d') modified VLDPE - Admer AT 1094 E by Mitsui.

### Example 20

A seven-layer film is prepared essentially as described in Example 19 but replacing the resin used for the outer abuse layer (bⁱⁱⁱ) with
(b^{vi}) a blend of 30 % by weight of EVOH [(44 mole % ethylene) - EVAL EP-105A by Marubeni] and 70 % by weight of a co-polyamide 6/12 with m.p. = 190 °C ((DSC- 2^{nd} heating) [CR-8 by EMS].

### Example 21

A seven-layer film is prepared essentially as described in Example 19 but replacing the resin used for the outer abuse layer (bⁱⁱⁱ) with
(b^{viii}) a blend of 30 % by weight of EVOH [(44 mole % ethylene) - EVAL EP-105A by Marubeni] and 70 % by weight of a co-polyamide 6/12 with m.p. = 199 °C ((DSC- 2^{nd} heating) [CF-85 by EMS].

### Example 22

A seven-layer film is prepared essentially as described in Example 1 but replacing the resin used for the outer abuse layer (b) with
(b^{ix}) a blend of 30 % by weight of EVOH [(44 mole % ethylene) - EVAL EP-105A by Marubeni] and 70 % by weight of a co-polyamide 6/66 with m.p. = 196 °C ((DSC- 2^{nd} heating) [Ultramid C35 by BASF].

### Example 23

A seven layer film is prepared essentially as described in Example 6 but replacing the resin used for the outer abuse layer (b') with
(b^{ix}) a blend of 30 % by weight of EVOH [(44 mole % ethylene) - EVAL EP-105A by Marubeni] and 70 % by weight of a co-polyamide 6/66 with m.p. = 196 °C ((DSC- 2^{nd} heating) [Ultramid C35 by BASF], and the resin used for intermediate layer (f ) with
(f") heterogeneous ethylene-octene-1 copolymer [d = 0.920 g/cm³ - m.p. = 124 °C (DSC - 2^{nd} heating) - MI = I g/10' (measured by ASTM D1238 - Condition E (190 °C, 2.16 kg)) - Dowlex 2045 E by Dow].

### Example 24

A seven-layer film is prepared essentially as described in Example 16 but replacing the resin used for the outer abuse layer (b^{iv}) with
(b^{ix}) a blend of 30 % by weight of EVOH [(44 mole % ethylene) - EVAL EP-105A by Marubeni] and 70 % by weight of a terpolyamide based on polyamide 6, polyamide 11, and polyamide 66 [sold by Bayer under the trade name Durethan® VP KU 2-2153 (m.p. 191 °C)]

### Example 25

A seven layer film is prepared essentially as described in Example 24 but replacing the resin used for layer (f') with
(f") heterogeneous ethylene-octene-1 copolymer [d = 0.920 g/cm³ - m.p. = 124 °C (DSC - 2^{nd} heating) - MI = 1 g/10' (measured by ASTM D1238 - Condition E (190 °C, 2.16 kg)) - Dowlex 2045 E by Dow].

### Example 26

A seven-layer film is prepared essentially as described in Example 24 but replacing the resin used for the outer abuse layer (b^{ix}) with
(b^{vii}) a blend of 30 % by weight of EVOH [(44 mole % ethylene) - EVAL EP-105A by Marubeni] and 70 % by weight of co-polyamide 6/6I with m.p. = 188-190 °C (DSC - 2^{nd} heating) [Durethan™ CI31F by Bayer].

### Example 27

A seven-layer film is prepared by following exactly the same procedure described in Example 11 but avoiding the irradiation step.

### Example 28

A seven-layer film is prepared by following exactly the same procedure described in Example 17 but reducing the dosage level of the irradiation step to 42 kGy.

### Example 29

A five layer film is prepared by following the same procedure as in Example 5 but varying the thickness of the gas barrier layer (c) from about 5 µm to about 7 µm, and that of the outer abuse layer (b') from about 5 µm to about 3 µm.

The properties of representative examples of films according to the present invention have been evaluated by submitting the films to the tests indicated below.

% Free shrink : the percent free shrink, i.e. the irreversible and rapid reduction, as a percent, of the original dimensions of a sample subjected to a given temperature under conditions where nil restraint to inhibit shrinkage is present, has been measured according to ASTM D2732, by immersing for 4 seconds specimens of the structures to be tested (10 cm x 10 cm) into a bath of hot water at 90 °C. This attribute has been measured in the longitudinal direction (LD) as well as in the transversal direction (TD) and is reported as the sum thereof, i.e. the total free shrink.

Haze : haze is defined as that percentage of transmitted light which in passing through the specimen deviates from the incident beam by forward scattering, and it has been measured by ASTM D 1003 (Procedure A).

Gloss : the specular gloss of the films, i.e. the relative luminous reflectance factor of a specimen in the mirror direction has been measured using ASTM 2457 - 90 with a gloss angle of 60°.

Modulus : the ratio of the tensile stress to corresponding strain below the proportional limit (kg/cm²); measured by ASTM D 882.

Tensile : a measure of the force required at constant elongation to break a specimen of the film (kg/cm²); measured by ASTM D 882.

Elongation : a measure of the percent extension required to break a specimen of the film (%); measured by ASTM D 882.

Puncture resistance : the puncture resistance is the resistance force arising when pushing a punch against a surface of flexible film. There is not a standard test method to measure this attribute. The test method used in the present evaluations is described briefly herein below : a film sample (6.5 cm x 6.5 cm) is fixed in a specimen holder connected to a compression cell (1-50 kg normal sensitivity) mounted on a dynamometer (an Instron tensile tester); when the dynamometer is started, a punch (a punching sphere, 5-mm in diameter, soldered on a plunger) is brought against the film sample at a constant speed (30 cm/min.) and the force needed to puncture the sample is graphically recorded.

In-line abuse resistance : the capability of the tested structures to withstand without breakage the in-line packaging operations, i.e. loading, vacuumizing, sealing, shrinking, and collecting the products through an idle roll conveyor, is defined as "in-line abuse resistance". Scope of this test is to provide a method to discriminate and rank bags of different structure at a laboratory level as to this aspect. The procedure to test this property is therefore devised so as to simulate as much as possible the most drastic conditions that might actually occur in the packaging lines. To perform this test, the bags to be examined are filled with metal blocks, vacuumized, sealed and shrunk on an industrial packaging line. The thus obtained packages are then checked for leakers and the in-line abuse resistance is evaluated by the % of rejects. Due to the harsh conditions purposely employed this number is typically high but, as indicated above, this test has not an absolute but only a relative meaning and its aim is to indicate whether a given structure is expected to have more or less abuse resistance of a standard bag used as comparison, when used at the customer plant.

The % Shrink, Haze, Gloss, Modulus, Tensile and Elongation of some representative structures of the present invention are reported on Table 1.

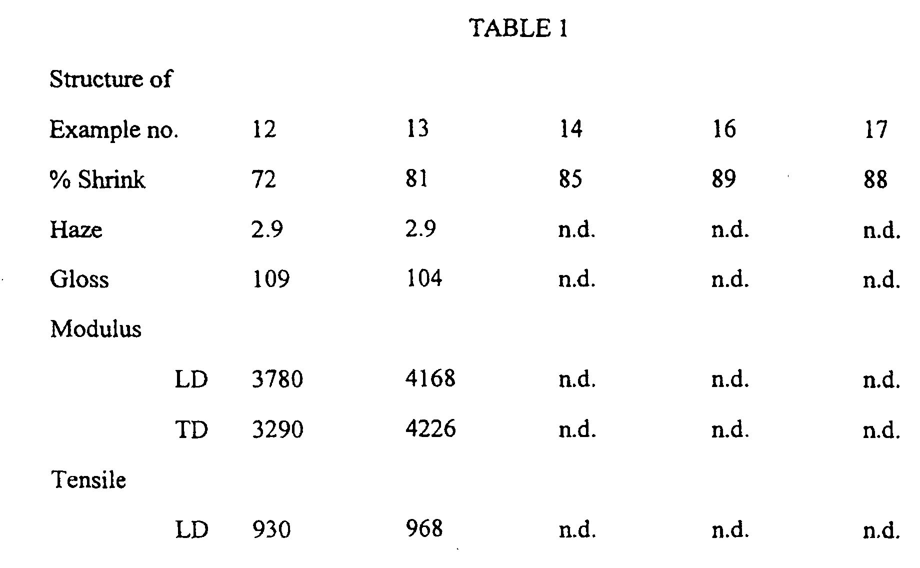

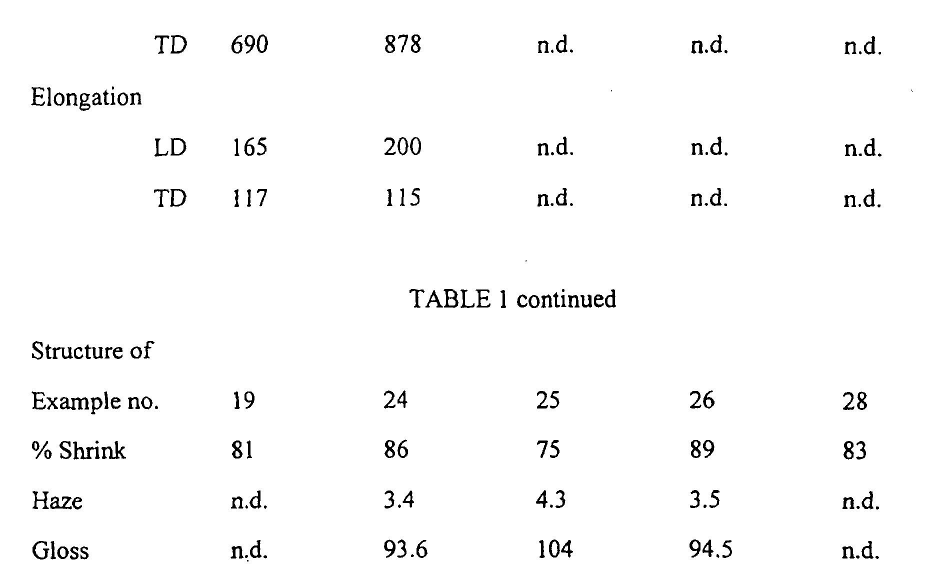

The results of the Puncture resistance and In-line abuse resistance tests for some representative structures of the present invention are reported in Table 2 below.

The bags used for the in-line abuse resistance tests were, 165 mm x 230 mm, end sealed bags. For comparative purposes the results obtained with a commercially available bag, 58 µm thick, sold by Cryovac ® as BB4L, are reported in the last column on the right.

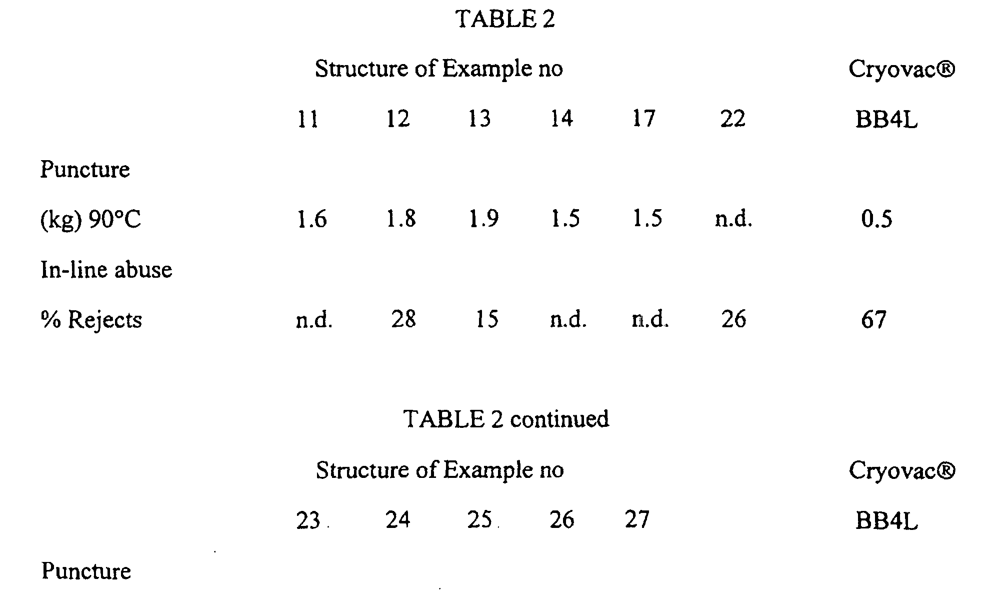

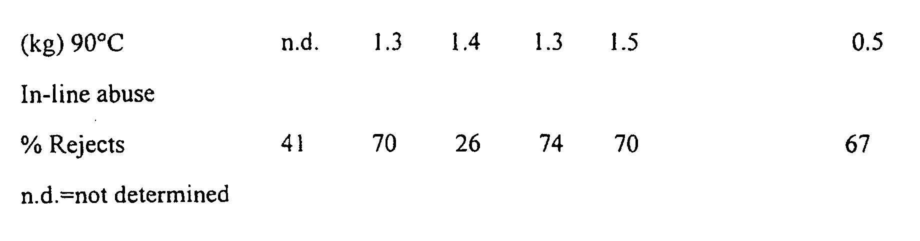

The sealing properties of some representative films of the present invention have been tested by evaluating the seal strength and the integrity of packages obtained by an overlapped sealing. An internal procedure has been developed to evaluate the ability of a heat-shrinkable bag to maintain seal hermeticity and integrity (i.e. no delamination) when submitted to a non-standard sealing cycle. As used herein "non standard sealing cycle" is intended to refer to the case where, in the packaging cycle, the bags filled with the product to be packaged are placed inside a vacuum sealing chamber machine mispositioned (i.e. at least partially overlapped). As indicated above, in an industrial packaging cycle, this may happen, in particular when the positioning of the bags in the vacuum sealing chamber is not controlled by an operator, or this may be done on purpose in order to increase the output per sealing cycle.

This test on overlapped sealability has been carried out on a Cryovac® VSC 75 vacuum sealing machine set with a vacuum time of 20 s, a cooling time of 4 s, a sealing bar pressure of 1 bar and an adjustable impulse time. The test is a comparative test and the results obtained are compared to a standard that is represented by the same bag used however in a standard sealing cycle where the bag is correctly positioned inside the vacuum sealing chamber making sure that no overlap occurs, and the same sealing conditions are applied.

In particular for each formulation two empty end-seal bags (260 mm width) obtained by transverse seal and cut of the oriented tubing, are placed in the center of the sealing bar overlapped one on the other by half of their width in order to simulate a non standard sealing cycle. The shrink bags are vacuumized and sealed at the pre-selected conditions. At the end of the cycle, the two shrink bags are slowly separated, one from the other, by tearing them apart along the seal seam. The seals are then visually checked for seal hermeticity and integrity (no delamination). The tests are then repeated at different impulse sealing times and the range of impulse times that allows to obtain reliable seals without rejects in case of non standard sealing cycle is determined. In Table 3 below, the minimum sealing impulse time (SIT min.) and the maximum sealing impulse time (SIT max.), i.e. the range of sealing impulse time at which the package hermeticity and integrity characteristics were maintained despite the non standard packaging cycle, are reported for some representative films according to the present invention.

**TABLE 3**

| Structure of Example no. | SIT min. (s) | SIT max (s) |
|---|---|---|
| 11 | 1.6 | 2.4 |
| 12 | 1.6 | 2.4 |
| 13 | 1.4 | 2.4 |
| 14 | 1.6 | 2.4 |
| 15 | 1.6 | 2.4 |
| 22 | 2.0 | 2.4 |
| 23 | 2.0 | 2.4 |
| 24 | 1.6 | 2.4 |
| 25 | 1.8 | 2.4 |
| 26 | 1.6 | 2.0 |
| 27 | 1.6 | 2.4 |

## Claims

1. A seamless tubing of a multi-layer heat-shrinkable film comprising at least
a first outer heat-sealing layer (a) comprising one or more polyolefins;
a second outer abuse layer (b) comprising a polyamide with melting point ≥ 175 °C; and
an intermediate gas barrier layer (c) comprising PVDC,
wherein the outer heat-sealing layer (a) is the innermost layer of the tubing.

2. A container obtained from a multi-layer heat-shrinkable film comprising at least
a first outer heat-sealing layer (a) comprising one or more polyolefins;
a second outer abuse layer (b) comprising a polyamide with melting point ≥ 175 °C; and
an intermediate gas barrier layer (c) comprising PVDC, wherein all of the layers of the multi-layer heat-shrinkable film are oriented, by a welding involving the outer heat-sealing layer (a), whereby said outer layer (a) is the inside layer of the container and the outer abuse layer (b) is the outside layer of the container.

3. The seamless tubing of claim 1 or the container of claim 2 wherein the polyamide of the outer abuse layer (b) has a melting point of from about 175 °C to about 250°C; preferably of from about 180 °C to about 240 °C; more preferably of from about 185 °C to about 230 °C; and still more preferably of from about 188 °C to about 225 °C.

4. The seamless tubing or the container of claim 3 wherein the polyamide of the outer abuse layer (b), with a melting temperature of from about 188 °C to about 225 °C, is selected from the group consisting of copolyamides 6/12, copolyamides 6/66, polyamide 6 copolymers (modified polyamide 6) comprising less than 5 %, preferably less than 4 %, and even more preferably less than 3 % by weight of an aromatic co-monomer, copolyamides of polyamide 6 and a partially aromatic polyamide, and terpolyamides based on polyamide 6, polyamide 11, and polyamide 66.

5. The seamless tubing or the container of claim 3 wherein the outer abuse layer (b) comprises at least 50 % by weight and preferably at least 60 % by weight of one or more polyamides with a m.p. ≥ 175 °C, blended with an ethylene-vinyl alcohol copolymer.

6. The seamless tubing or the container of claim 4 wherein the amount by weight of EVOH in the outer abuse layer (b) with respect to the overall weight of the layer is comprised between about 3 and about 40 % by weight, preferably between about 5 and about 35 % by weight, and even more preferably between about 10 and about 30 %.

7. The seamless tubing of claim 1 or the container of claim 2 wherein the heat-sealing layer (a) comprises a single polyolefin or a blend of two or more polyolefins with melting temperature < 140°C, preferably < 130°C, and more preferably comprised between 80°C and about 128 °C.

8. The seamless tubing or the container of claim 7 wherein the heat-sealing layer (a) comprises heterogeneous or homogeneous ethylene-(C₄-C₈)-α-olefin copolymers having a density ≤ 0.915 g/cm³, blends thereof with minor amount of polyethylene homopolymers, ethylene-vinyl acetate copolymers, ethylene-acrylic or methacrylic acid copolymers including ionomers, blends of heterogeneous or homogeneous ethylene-(C₄-C₈)-α-olefin copolymers having a density from about 0.915 g/cm³ to about 0.930 g/cm³ with ethylene-vinyl-acetate copolymers or ethylene-alkyl (meth)acrylate copolymers, ethylene-propylene-butene ter-polymers, and/or ethylene-alkyl acrylate-maleic anhydride ter-polymers.

9. The seamless tubing or the container of claim 8 wherein the heat-sealing layer (a) comprises a heterogeneous or homogeneous ethylene-(C₄-C₈)-α-olefin copolymer having a density ≤ 0.915 g/cm³, and preferably a heterogeneous or homogeneous ethylene-(C₄-C₈)-α-olefin copolymer- having a density comprised between about 0.895 g/cm³ and about 0.912 g/cm³.

10. The container of any of preceding claims 2 to 9, in the form of a bag.

## Patentansprüche

1. Nahtloses Schlauchmaterial aus mehrschichtiger wärmeschrumpfbarer Folie, die mindestens
eine erste äußere Heißsiegelschicht (a), die ein oder mehrere Polyolefine umfasst;
eine zweite äußere Schutzschicht (b), die Polyamid mit Schmelzpunkt ≥ 175°C umfasst, und
eine dazwischen liegende Gasbarriereschicht (c) umfasst, die PVDC umfasst,
wobei die äußere Heißsiegelschicht (a) die innerste Schicht des Schlauchmaterials ist.

2. Behälter, der aus einer mehrschichtigen wärmeschrumpfbaren Folie, die mindestens
eine erste äußere Heißsiegelschicht (a), die ein oder mehrere Polyolefine umfasst;
eine zweite äußere Schutzschicht (b), die Polyamid mit Schmelzpunkt ≥ 175°C umfasst, und
eine dazwischen liegende Gasbarriereschicht (c) umfasst, die PVDC umfasst,
wobei alle Schichten der mehrschichtigen wärmeschrumpfbaren Folie orientiert sind,
durch Schweißen unter Beteiligung der äußeren Heißsiegelschicht (a) erhalten worden ist, wobei die äußere Schicht (a) die Innenseitenschicht des Behälters ist und die äußere Schutzschicht (b) die Außenseitenschicht des Behälters ist.

3. Nahtloses Schlauchmaterial nach Anspruch 1 oder Behälter nach Anspruch 2, bei dem das Polyamid der äußeren Schutzschicht (b) einen Schmelzpunkt von etwa 175°C bis etwa 250°C, vorzugsweise etwa 180°C bis etwa 240°C, insbesondere etwa 185°C bis etwa 230°C und bevorzugter etwa 188°C bis etwa 225°C hat.

4. Nahtloses Schlauchmaterial oder Behälter nach Anspruch 3, bei dem das Polyamid der äußeren Schutzschicht (b) mit einer Schmelztemperatur von etwa 188°C bis etwa 225°C ausgewählt ist aus der Gruppe bestehend aus Copolyamiden 6/12, Copolyamiden 6/66, Polyamid 6-Copolymeren (modifiziertem Polyamid 6), die weniger als 5 Gew.-%, vorzugsweise weniger als 4 Gew.-% und bevorzugter weniger als 3 Gew.-% aromatisches Comonomer umfassen, Copolyamiden von Polyamid 6 und partiell aromatischem Polyamid sowie Terpolyamiden auf Basis von Polyamid 6, Polyamid 11 und Polyamid 66.

5. Nahtloses Schlauchmaterial oder Behälter nach Anspruch 3, bei dem die äußere Schutzschicht (b) mindestens 50 Gew.-% und vorzugsweise mindestens 60 Gew.-% von einem oder mehreren Polyamiden mit einem Schmelzpunkt ≥ 175°C gemischt mit Ethylen/Vinylalkohol-Copolymer umfasst.

6. Nahtloses Schlauchmaterial oder Behälter nach Anspruch 4, bei dem die Gewichtsmenge EVOH in der äußeren Schutzschicht (b) in Bezug auf das Gesamtgewicht der Schicht zwischen etwa 3 und etwa 40 Gew.-%, vorzugsweise zwischen etwa 5 und etwa 35 Gew.-% und insbesondere zwischen etwa 10 und etwa 30 Gew.-% liegt.

7. Nahtloses Schlauchmaterial nach Anspruch 1 oder Behälter nach Anspruch 2, bei dem die Heißsiegelschicht (a) ein einzelnes Polyolefin oder ein Gemisch aus zwei oder mehr Polyolefinen mit Schmelztemperatur < 140°C, vorzugsweise < 130°C und insbesondere zwischen 80°C und etwa 128°C umfasst.

8. Nahtloses Schlauchmaterial oder Behälter nach Anspruch 7, bei dem die Heißsiegelschicht (a) heterogene oder homogene Ethylen/(C₄- bis C₈)-α-Olefin-Copolymere mit einer Dichte ≤ 0,915 g/cm³, Gemische davon mit geringen Mengen an Polyethylenhomopolymeren, Ethylen/Vinylacetat-Copolymere, Ethylen/Acryl- oder -Methacrylsäure-Copolymere einschließlich Ionomeren, Gemische aus heterogenen oder homogenen Ethylen/(C₄- bis C₈)-α-Olefin-Copolymeren mit einer Dichte von etwa 0,915 g/cm³ bis etwa 0,930 g/cm³ mit Ethylen/Vinylacetat-Copolymeren oder Ethylen/Alkyl(meth)-acrylat-Copolymeren, Ethylen/Propylen/Buten-Terpolymere, und/oder Ethylen/Alkylacrylat/ Malein-säureanhydrid-Terpolymere umfasst.

9. Nahtloses Schlauchmaterial oder Behälter nach Anspruch 8, bei dem die Heißsiegelschicht (a) heterogenes oder homogenes Ethylen/(C₄-bis C₈)-α-Olefin-Copolymer mit einer Dichte ≤ 0,915 g/cm³ und vorzugsweise heterogenes oder homogenes Ethylen/(C₄- bis C₈)-α-Olefin-Copolymer mit einer Dichte zwischen etwa 0,895 g/cm³ und etwa 0,912 g/cm³ umfasst.

10. Behälter nach einem der vorangehenden Ansprüche 2 bis 9, der in Form eines Beutels vorliegt.

## Revendications

1. Tube sans soudure d'un film multicouche contractible à chaud, comprenant au moins:
- une première couche externe de scellement à chaud (a), comprenant une ou plusieurs polyoléfines;
- une deuxième couche externe d'usure (b) comprenant un polyamide avec un point de fusion ≥ 175°C; et
- une couche intermédiaire de barrière aux gaz (c) comprenant du PVDC,
où la couche externe de scellement à chaud (a) est la couche la plus intérieure du tube.

2. Récipient obtenu à partir d'un film multicouche contractible à chaud, comprenant au moins:
- une première couche externe de scellement à chaud (a), comprenant une ou plusieurs polyoléfines;
- une deuxième couche externe d'usure (b) comprenant un polyamide avec un point de fusion ≥ 175°C; et
- une couche intermédiaire de barrière aux gaz (c) comprenant du PVDC,
où toutes les couches du film multicouche contractible à chaud sont orientées, par un soudage impliquant la couche externe de scellement à chaud (a), ce par quoi la couche externe (a) est la couche intérieure du récipient et la couche externe d'usure (b) est la couche extérieure du récipient.

3. Tube sans soudure selon la revendication 1 ou récipient selon la revendication 2, dans lequel le polyamide de la couche externe d'usure (b) a un point de fusion allant d'environ 175°C à environ 250°C, de préférence d'environ 180°C à environ 240°C, de manière plus préférée d'environ 185°C à environ 230°C, et de manière encore plus préférée, d'environ 188°C à environ 225°C.

4. Tube sans soudure ou récipient selon la revendication 3, dans lequel le polyamide de la couche externe d'usure (b), avec une température de fusion d'environ 188°C à environ 225°C, est choisi parmi le groupe consistant en les copolyamides 6/12, les copolyamides 6/66, les copolymères de polyamide 6 (polyamide 6 modifié) comprenant moins de 5%, de préférence moins de 4%, et de manière encore plus préférée moins de 3% en poids d'un comonomère aromatique, les copolyamides de polyamide 6 et d'un polyamide partiellement aromatique, et les terpolyamides à base de polyamide 6, polyamide 11 et polyamide 66.

5. Tube sans soudure ou récipient selon la revendication 3, dans lequel la couche externe d'usure (b) comprend au moins 50% en poids et de préférence, au moins 60% en poids d'un ou de plusieurs polyamides avec un P_{f} ≥ 175°C, mélangé à un copolymère éthylène-alcool vinylique.

6. Tube sans soudure ou récipient selon la revendication 4, dans lequel la quantité en poids de EVOH dans la couche externe d'usure (b) par rapport au poids total de la couche, se situe dans l'intervalle allant d'environ 3 à environ 40% en poids, de préférence d'environ 5 à environ 35% en poids et de manière encore plus préférée, d'environ 10 à environ 30%.

7. Tube sans soudure selon la revendication 1 ou récipient selon la revendication 2, dans lequel la couche de scellement à chaud (a) se compose d'une polyoléfine unique ou d'un mélange de deux ou de plusieurs polyoléfines avec une température de fusion < 140°C, de préférence < 130°C et de manière plus préférée, comprise entre 80°C et environ 128°C.

8. Tube sans soudure ou récipient selon la revendication 7, dans lequel la couche de scellement à chaud (a) se compose de copolymères hétérogènes ou homogènes éthylène-α-oléfine (C₄-C₈), ayant une densité ≤ 0,915 g/cm³, des mélanges de ceux-ci avec des quantités mineures d'homopolymères de polyéthylène, de copolymères éthylène-acétate de vinyle, de copolymères éthylène-acide acrylique ou méthacrylique, y compris les ionomères, les mélanges de copolymères hétérogènes ou homogènes éthylène-α-oléfine (C₄-C₈) ayant une densité allant d'environ 0,915 g/cm³ à environ 0,930 g/cm³, avec des copolymères éthylène-acétate de vinyle ou des copolymères éthylène-(méth)acrylate d'alkyle, de terpolymères éthylène-propylène-butène et/ou des terpolymères éthylène-acrylate d'alkyle-anhydride maléique.

9. Tube sans soudure ou récipient selon la revendication 8, dans lequel la couche de scellement à chaud (a) comprend un copolymère hétérogène ou homogène éthylène-α-oléfine (C₄-C₈), ayant une densité ≤ 0,915 g/cm³, et de préférence un copolymère hétérogène ou homogène éthylène-α-oléfine (C₄-C₈) ayant une densité comprise entre environ 0,895 g/cm³ et environ 0,912 g/cm³.

10. Récipient selon l'une quelconque des revendications précédentes 2 à 9, sous la forme d'un sac.
